Europäisches Patentamt

European Patent Office

Office européen des brevets

(11) Publication number: 0 387 925
A1

# EUROPEAN PATENT APPLICATION

(21) Application number: 90200011.6

(22) Date of filing: 03.01.90

(51) Int. Cl.5: G01N 11/06, G05D 7/06, F04B 43/06

(30) Priority: 16.03.89 BE 8900292

(43) Date of publication of application:
19.09.90 Bulletin 90/38

(84) Designated Contracting States:
AT BE CH DE DK ES FR GB GR IT LI LU NL SE

(71) Applicant: DORR-OLIVER INCORPORATED
612 Wheeler's Farm Road
Milford Connecticut 06460-8719(US)

(72) Inventor: Balembois, Claude
37, Avenue de l'Avenir
B-1640 Rhode St. Genese (Brussels)(BE)

(74) Representative: Kooy, Leendert Willem et al
OCTROOIBUREAU VRIESENDORP & GAADE
P.O. Box 266
NL-2501 AW The Hague(NL)

(54) Method of and device for monitoring and controlling the physical state of an incompressible fluid.

(57) A method for the quantized qualitative control of the instant local consistency of an indefinite amount or mass of fluid material such as a liquid or a pasty substance (sludge or pulp), consisting in applying a determined constant head load or pressure force to a defined volume of said material confined within an invariable guide space for setting the same into forced flowing motion within this space and measuring the duration of global displacement of said volume over a given distance between two determined spaced passage points of its path of travel, this displacement time being representative of at least the, mean state of consistency of said volume of material.

Fig. 1

## Method of and device for monitoring and controlling the physical state of an incompressible fluid

The present invention relates generally and has essentially for its subject matter a method of qualitative in particular quantized monitoring of the instant local physical state of a substantially incompressible fluid material such as a liquid or pasty substance (for instance slurry or pulp) and a device for carrying out this method as well as a process of operating this device and the various applications and uses resulting from the working of the method and/or process and/or device in particular for the preferably automatic control of said physical state. The invention is also directed to the various equipments and systems provided with at least oner:such device.

In the various industrial engineering processes are used liquid or pasty incompressible fluids such as sludges or pulps which after having undergone a previous elaborating or in particular physical conditioning treatment are carried or conveyed in indefinite amounts towards a place of subsequent utilization, consumption, treatment or transformation. In industrial facilities this transport is generally performed through pumping and flow circulation within pipelines or ducts. According to their nature, these fluids would exhibit a physical state which possibly is locally variable with time and in space and which is a function in particular of its instant local density and/or its viscosity and/or its solid matter content, these variable state parameters thus defining and characterizing the instant local consistency of the fluid. It is advantageous if not necessary to know the instant local consistency of the fluid involved in particular at its place of delivery, of destination or of use so as to be able to monitor or to ascertain the possible variations thereof in order to make it possible if need be to correct them in particular for obtaining a consistency of the desired quality.

The invention has therefore mainly for its object to solve this problem by providing a method of control consisting in the determination of the instant local physical state of the fluid involved by the measurement of a physical value specifically dependent of at least said state. Among the various physical values Co be contemplated may be found in particular the resistance to flow, the flow velocity the volumetric flow rate as well as other kinematic and dynamic parameters to be determined under particular defined conditions.

The method according to the invention is characterized in that it consists in applying a possibly selectively variable, constant determined head or pressure force to a defined volume of one fluid material considered, confined within an invariable guiding space for setting the same in forced flowing motion within that space and in measuring the duration of global displacement of said volume over a given distance between two determined spaced passage-way points of its path of travel, this displacement time being representative of the at least average state of consistency of said volume of material.

According to another characterizing feature of the invention and according to a preferred embodiment thereof this determination of the displacement time is performed by the detection of the successive passages of a physical indicator invariably bound to the unidirectional body motion of said fluid material at each one of the two aforesaid points of its path of travel and by the measurements of the time lapsed between both sensing moments or signals.

According to still a further characterizing feature of the invention, the aforesaid duration of displacement is the duration of emptying an enclosure of constant capacity forming the aforesaid confined guiding space, filled with the aforesaid fluid material and emptiod through discharge of the contained finite volume of fluid material under the aforesaid Steady head outside of said enclosure.

The method according to the invention is applicable in a in particular periodically intermittent or regularly or irregularly repeated continuous or discontinuous way.

According to still another characterizing feature of the invention the method is applicable for the preferably continuous control of the fluid material in forced flow, displaced through volumetric lift-and-force pumping carried out within the aforesaid enclosure and it is characterized by the measurement of the duration of each force stroke under a substantially constant discharge pressure.

According to still a further characterizing feature of the invention, the method is usable in particular in a line or way of forced flow of the aforesaid fluid material for keeping substantially constant the state of desired consistency hence the discharge time and also preferably the desired volumetric flow rate of the aforesaid discharged fluid material through automatic control of at least one respective adjustment factor of its physical values such as the instant speed or volumetric flow rate or power of pumping, the pumping cycle time and/or the parameters of previous physical treatment or conditioning or elaboration of said material or of action upon the source of supply thereof.

There is already known in particular from the flrior Belgian patent N° 902,161, a method consisting in selecting a desired volumetric flow rate, in determining in accordance with the desired volumetric flow rate and the available pumping capacity, a duration of the sucion or filling and discharging or emptying cycle of the aforesaid pumping enclosure and in operating the performance of each pumping cycle at the end of said cycle duration to thereby match the instant effective cyclic volumetric pumping flow rate with the desired true volumetric flow rate which possibly is thus adjustable at will. In this known process is used in particular a time counting for the selective adjustment of a predetermined cycle time which thereby is variable at will.

The method according to the invention constitutes to some extent an improvement to this known method and according to another characterizing feature of the invention it consists in setting a reference discharge time corresponding to the desired state of consistency of the discharged fluid material and in correcting or cancelling any difference between the true and reference discharge times, respectively, by comparing during each pumping cycle the measured instant true dicharge time to the reference discharge time and in particular by changing the pumping speed in accordance with the variation in the discharge time represented by the deviation ascertained between the measured and reference values, respectively, of the discharge time so as to restore the reference or desired discharge time preferably overriding the regulation of the volumetric flow rate.

According to another characterizing feature of the invention the method carries out a computerized processing of the data with storage and possible programming of operations of action upon variable physioal state conditions of the aforesaid fluid material and/or of outer physical values such as the loads or forces exerted in upstream or downstream processes, levels of fluid material in tanks for storing the fluid material in praticular upstream for feeding the aforesaid pumping enclosure and/or downstream for receiving the delivered fluid material. According to a further characterizing feature of the invention, the pumping speed is controlled in followed-up relationship by the delivery time the variation of' which is programmable according to a set index law.

The invention is also directed to adevice for carrying out the aforesaid method. It is already known in particular from the aforesaid prior Belgian patent N° 902,161 a device comprising a volumetric pump with alternating filling or sucking and emptying or discharge, with a driven positive-displacement impeller member performing a rectilinear reciprocating motion and interlocked with a physical indlicator movable between two opposite end positions corresponding to the end positions of suction and force strokes, respectively, of said member, with which are respectively associated position, detectors or sensors successively transmitting each one a signal of presence of the said indicator to a chronometrically adjustable system for operating the pump motor the actuation of which for delivery is under the follow-up control of the cycle time, said motor applying when it is operated a constant thrust force to said member for displacing the latter in the direction of delivery.

The device according to the invention constitutes somewhat of an improvement to this known device and it is characterized in that the aforesaid operating system consists of a combined contrivance forming a preferably electronic regulator in particular with a programmable microprocessor for accomplishing the aforesaid functions by carrying out the aforesaid operating steps.

According to another characterizing feature of the invention, the aforesaid regulator comprises a key-board for the selection of the physical input value (volumetric flow rate, delivery time, insensitivity or error range) to be stored, for adjusting the numerical value thereof in the increasing or decreasing direction for setting its reference or index value, and for the enabling of the latter, respectively, as well as means for displaying or visually indicating said input values, respectively, and preferably the calculated cycle-time and the true or measured delivery time.

According to still another characterizing feature of the invention, the device may comprise alarm or warning means incoporated for instance into the aforesaid controller and signalling in particular any impossibility of adjustment in view of the particular instant nature of said fluid material as well as malfunctions likely to result in a misadjustment or defective operation, such an abnormal condition consisting for instance of two short a suction or filling duration resulting in particular from a casual or undue blocking-up of the suction or filling valve.

According to a further characterizing feature of the invention this device is usable as a sampling or test or pilot device mounted in an auxiliary duct for bleeding or drawing off fluid material which is arranged in by-passing relationship with a main flow duct or pipe-line of said fluid material, said device being likely to actuate a control valve or other controlled-action devices arranged on said main duct.

The invention is at last directed to a process of operating said device advantageously applicable in particular to the system known from the said prior Belgian patent N° 902,161 and comprising a diaphragm pump filled in particular under gravity load with the aforesaid fluid material and possibly assisted during the suction stroke by a diaphragm drawback spring and with single delivery action by a power fluid under substantially constant pressure, for instance compressed air, with alternate intake and exhaust through a particular electromagnetic multiple-way valve actuated by the aforesaid operating system electrically connected to two proximity sensors detecting the opposite stroke end positions of a metallic magnetizable metal body invariably connected to said diaphragm. This process is characterized by the following successive operating steps accomplished under the control of the aforesaid regulator during an operating cycle of the pump :

-at the start of the cycle, sensing said body in the pump fillingstroke end position;

-simultaneous control for opening the compressed air inlet way and closing the exhaust way, respectively, of said valve for causing the pump to be emptied through forcing its content out;
-sensing said body in the delivery stroke end position;
-storing the emptying time for comparison with the previously adjusted reference or set delivery time;
-simultaneous control of closing the compressed air inlet way and opening the compressed air exhaust way, respectively, of the aforosaid valve to discontinue the intake of compressed air into the pump and exhausting the compressed air contained therein;
-filling said pump through gravity with said fluid material;
-sensing said Qody in the pump filling stroke end position;
-time-delaying for a stand-by period until the lapse of the cycle time for delaying or retarding the control action upon said valve or for exerting an early action thereupon in accordance with the measured emptying time;
- at the cycle end, return to the initial operating step for simultaneous control of the closing of the exhaust way and the opening of the inlet way, respectively, of said valve.

If the device according to the invention has to be used only for the measurement of the consistency of said fluid material the accuracy of the measurement may. be increased by decreasing the delivery pressure, i.e. the pressure of the drive pressure fluid such as compressed air since it then is possible to measure greater deviations.

As already stated hereinbefore the controller unit may be programmed so as to be capable of handling varying conditions such for instance as those exhibited by slurries that will only settle to lower solid matters content than normal. The controller would then act to accelerate the pump and if the delivery time does not decrease the pump would keep operating at high speed until the sludge has been discharged and the delivery time decreases.

The invention will be better understood and further objects, characterizing features, details and advantages thereof will become more apparent as the following explanatory description proceeds with reference to the accompanying diagrammatic drawings given by way of non limiting example only illustrating a presently preferred specific embodiment of the invention and wherein :
- Figure 1 shows an overall view of the system according to the Invention with a pump in vertical axial section mounted in a duct for circulating the fluid material to be controlled;
- Figure 2is a cross section taken upon the line II-II of Figure 1;
- Figure 3 shows a simplified diagrammatic basic sketch of said pump illustrating its operation;
- Figure 4 is an explanatory diagram of the operation of the method according to the invention using said pump, this diagram being arranged in registering relationship with the pump of Figure 3;
- Figure 5 shows a block diagram of the method of the aforesaid example in accordance with the invention;
- Figure 6 shows a graphical plot:, versus the cumulative operating time, of the variation on the one hand of the delivery time and on the other hand of the density or specific mass of the pumped sludge according to a typical particular example of application; and
- Figure 7 is a graphical plot of the variation of the duration of delivery versus the density or specific mass of the slurry in the typical exemplary application.

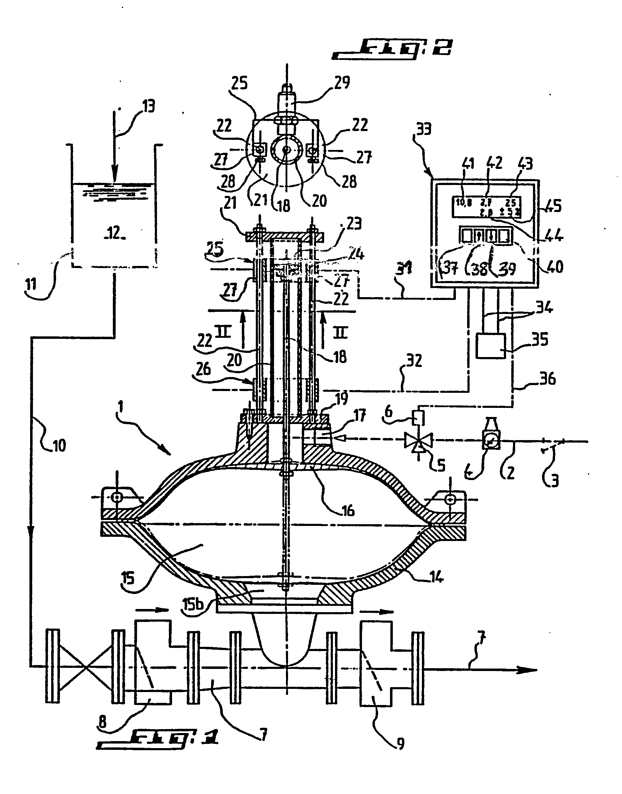

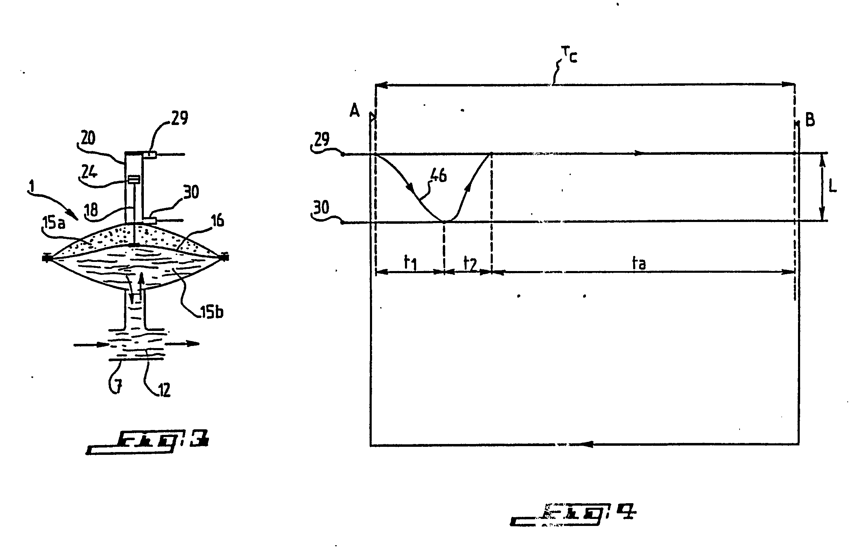

According to the exemplary embodiment shown on Figures 1 and 2 of the drawings the system according to the invention comprises a pneumatically operated pump designated in a general manner by the reference numeral 1 and adapted to be fed with power compressed air from a source of supply of compressed air (not shown) for instance under a substantially constant pressure of 4 bar by means of a feed and exhaust duct 2 successively through a filter 3, a pressure reducer 4 and a valve 5 electromagnetically operated by a solenoid 6 and adapted to put the pump 1 alternately in communication with the source of supply of compressed air and with the exhaust to the atmosphere.

The pump shown corresponds in particular to the one described and shown in the aforesaid prior Belgian patent N° 902,161. This pump is mounted in a pipeline 7 for the flow of a liquid or pasty fluid and in particular of a slurry or pulp between an upstream feed-check or back-pressure filling or suction valve 8 and adownstream feed-check or back-pressure emptying or delivery valve 9. The upstream valve 8 communicates through a duct 10 with a tank 11 for storing the sludge or pulp 12 exposed to atmospheric pressure 13 and located ata higher level than the pump so as to keep the latter under automatic filling load or head through the agency of the upstream valve 8.

The pump 1 comprises a hollow casing 14 the inner cavity 15 of which is subdivided by an intermediate flexible diaphragm 16 forming a partition wall movable through resilient strain into two overlying opposite chambers, namely an upper compressed air-receiving chamber 15a and a lower sludge-receiving chamber lsb, both adjacent chambers having capacities variable in opposite directions, respectively. The top chamber 15a is in communication through a thoroughfare port 17 of the pump casing with the adjacent portion of the duct 2 connected to that port whereas the bottom chamber lsb is in permanent communication with the pipe portion 7 located between both upstream and downstream valves 8, 9, respectively.

The pump is advantageously oriented so that the centre plane of the pump casing containing the resilient diaphragm 16 in its neutral flat intermediate rest position be substantially horizontal and placed above the sludge-carrying piping 7. The diaphragm 16 is made fast in the middle with a vertical rod 18 extending upwards from the diaphragm and extending in sliding relationship through the top closure cover or cap 19 of the pump casing so as to be thus more or less guided in its reciprocating vertical translatory motion imparted by the diaphragm 16 all the movements of which are accurately followed by the rod. The rod portion which is thus outside of the pump casing projects into an upstanding cylindrical tube 20 substantially along the longitudinal centre line axis thereof. This tube made from a non-magnetic material preferably is transparent to allow the visual observation of the displacement of the rod 18 from the outside and it is secured in fluid-tight sealed relationship onto the pump casing by being clamped through its opposite ends between the bottom cap 19 formed with a sunk facing to accommodate the bottom end of the tube and a top cover 21 also formed with a sunk facing to accommodate the top end of the tube closed by this cover, respectively, the tube 20 being clamped between the parts 19 and 21 by means of two parallel threaded brace rods or tie bolts 22 connecting the parts 19 and 21 and arranged symmetrically with respect to the longitudinal vertical centre line axis of the tube 20, respectively, on either side of the tube and outside thereof.

The rod 18 is more or less centered and its upper end guided in the tube 20 by means of a crosswise extending washer or the like 23 secured at the top end of the rod 18 and in sliding engagement with the inner surface of the side wall of the tube 20. At the top end and below the washer 23 is secured a magnetizable metallic body 24 for instance shaped as a cylindrical disc with a diameter smaller than the inner diameter of the tube 20 so as to leave an annular clearance between the radially outer periphery of the body 24 and the inner wall of the tube 20.

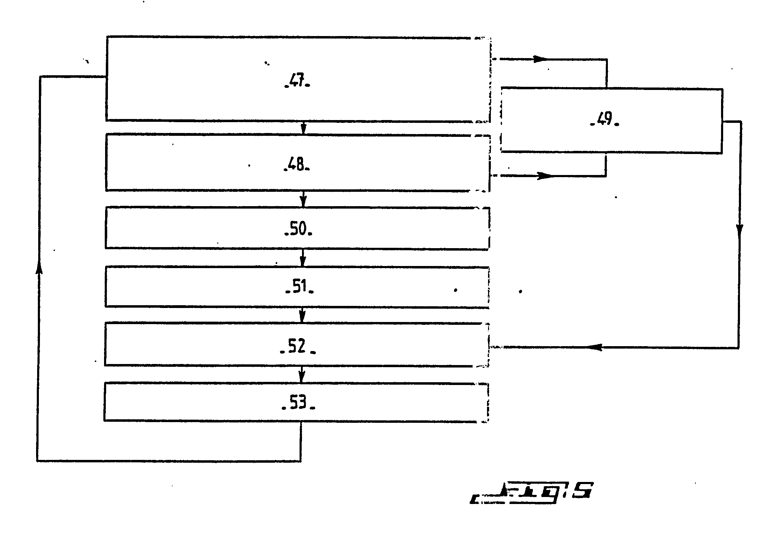

On the pair of tie bolts 22 are secured in a selectively adjustable position two upper and lower supports 25 and 26, respectively, each one shaped as a substantially horizontal yoke encompassing the tube 20 with its parallel legs. The end of each side leg of each yoke 25, 26 is provided with a bushing or the like 21 through which extends avertical hole, both bushes of a same yoke being thus threaded on both tie bolts 22, respectively. Each support 25, 26 thus is displaceable vertically in sliding relationship on the tie bolts 22 and may be held against motion thereon in any relative position through clamping against the tie bolts by means of lock screws 28 screwed each one crosswise through the bushes 27 to come and pressed bearing engagement against the tie bolts 22. Each yoke 25, 26 carries on its cross-limb in the middle thereof a proximity detector switch 29, 30 (see Figures 2 and 3). Each proximity detector switch 29, 30 fastened in preferably adjustable relationship on its holder 25, 26, radially bears endwise of its sensing tip in sliding relationship against the surface of the outer side wall of the tube 20 thereby being located substantially in the diametral longitudinal axial plane of this tube. The upper sensor-carrier 25 is positioned in stationary relationship on the tie bolts 22 so that its detector switch 29 be in front of the magnetizable metal body 24 at the top filling or suction stroke end position of the diaphragm 36 hence of the rod ls whereas the lower sensor-carrier 26 is positioned in stationary relationship on the tie bolts 22 at a location such that its detector switch 30 be in front of the magnetizable metal body 24 in the bottom emptying or discharge stroke endposition of the diaphragm 16 hence of the rod 18.

Both aforesaid proximity detector switches are connected through electric wire leads 31, 32, respectively, to an electronic timer controller 33 which is connected on the one hand through wire leads 34 to a source of supply of electric power 35 and on the other hand through an electric wire lead 36 to the electromechanical servo-motor of the valve 5 consisting of the actuator solenoid or electro-magnet 6.

The regulator 33 carries on its outer side a panel comprising a key-board and a display or visual indicator device. The key-board comprises in particular the following push-buttons :
- a push-button 37 for selecting the desired volumetric flow rate (expressed in $m^3/h$, the reference or set value of the delivery or emptying time and the insensivity or relative error factor;
- two push-buttons 38, 39 foL adjusting the aforesaid values in the increasing and decreasing directions, respectively;
- a push-button 40 for enabling the afo-esaid values entered or stored into the apparatus.
The display device comprises :
- a window 41 for displaying the cycle time calculated by the controller and for instance equal to 10.8 s;
- a window 42 for displaying the actual or measured delivery time, for instance equal to 2.7 s;
- a window 43 for displaying the desired volumetric flow rate, for instance equal to 25 m³/h;
- a window 44 for displaying the reference or set value of the delivery time for instance equal to 2.8 s;

- a window 45 for displaying the insensitivity or relative error factor for instance equal to ± 5%.

According to an alternative embodiment not shown in the drawings but corresponding to an embodiment described and shown in the aforesaid piior Belgian patent N° 902,161, the rod 18 may comprise at anlinterdemediate location of its length a stationary stop the position of which is possibly adjustable at will and against which would abut the top end of a compression coil spring threaded onto the rod and the bottom end of which is abutting against the cover 19 of the pump casing. This coil spring preferably exhibits a slight initial compression prestress. During the delivery period when the diaphragm 16 moves downwards under the action of the compressed air it would carry along the rod 18 which thus squeezes the spring until the diaphragm reaches its lower end position (shown in broken dash-dotted lines on Figure 1) at the end of the discharge period, so that when the top chamber 15a is connected to the exhaust, the aforesaid spring would expand while exerting an upward biassing force onto the rod 15 hence onto the diaphragm 16 which thereby is automatically moved back into its upper end position (shown in solid lines on Figure 1) during the consecutive filling period. This spring therefore exerts a positive upward force onto the diaphragm thereby additionally increasing the head load upon the bottom chamber 15b, sao that the diaphragm would then exert a suction action upon the sludge from the beginning of the filling period.

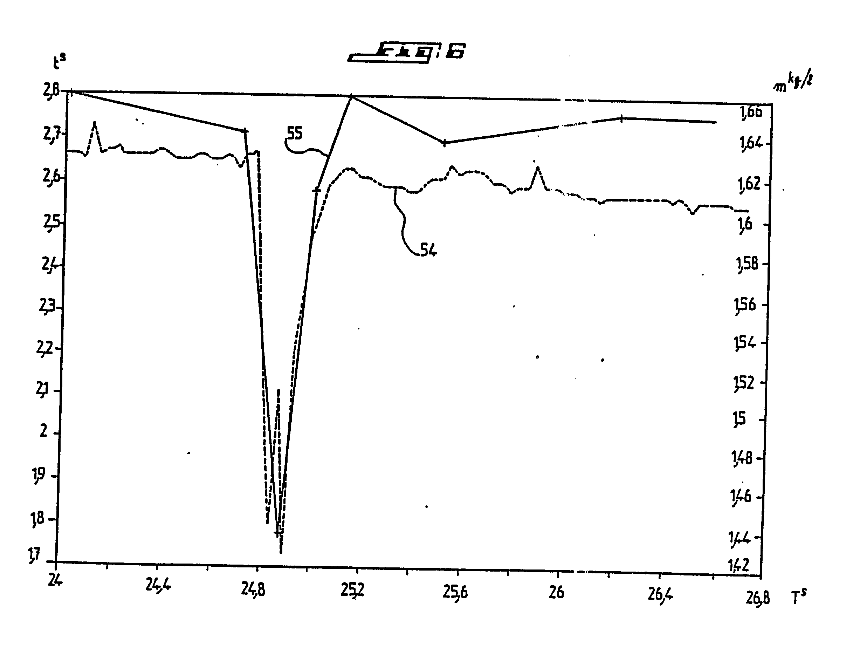

Figures 3 and 4 illustrate the operation of the system according to the invention during a working cycle of the pump under the action of the regulator 33. Figure 4 shows a curve 46 representing the displacement of the magnetizable body 24 (plotted in ordinates) as a function of time (plotted in abscissae). Each working cycle of the pump has a duration $T_c$ possibly variable in accordance with the consistency of the pumped slurry. This cycle time corresponds to the desired volumetric flow rate which has been entered and displayed hence stored into the controller 33. In general this cycle time To is at least equal to or greater than the sum of the respective durations of delivery or emptying $t_1$ and filling or suction $t_2$ successively, carried out and which corresponds to the own pumping capacity of the pump involved Thus if the pump would operate in a continuous steady state fashion, it would be likely to supply a volumetric flow rate greater than the desired volumetric flow rate, so that it would be necessary to operate the pump in a pulsed, intermittent or discontinuous fashion the cycle time of which would thus consist of a delivery or emptying time $t_1$, of a filling or suction time $t_2$ and of an idle or stand-by time ta possibly equal to zero and which £ollows the end of the filling or suction period and would thereby delay the following emptying or delivery period, the start of the cycle being symbolically designated by the reference character A and the cycle end being symbolically designated by the reference character B on Figure 4. The curve 46 is thus trading off by generally spaced or separaed undulated portions between both horizontal straight lines 29 and 30 corresponding to the positions of the top and bottom detector switches 29 and 30, respectively, and vertically spaced by the length L of the stroke of the magnetizable body 24 hence of the diaphragm 16.

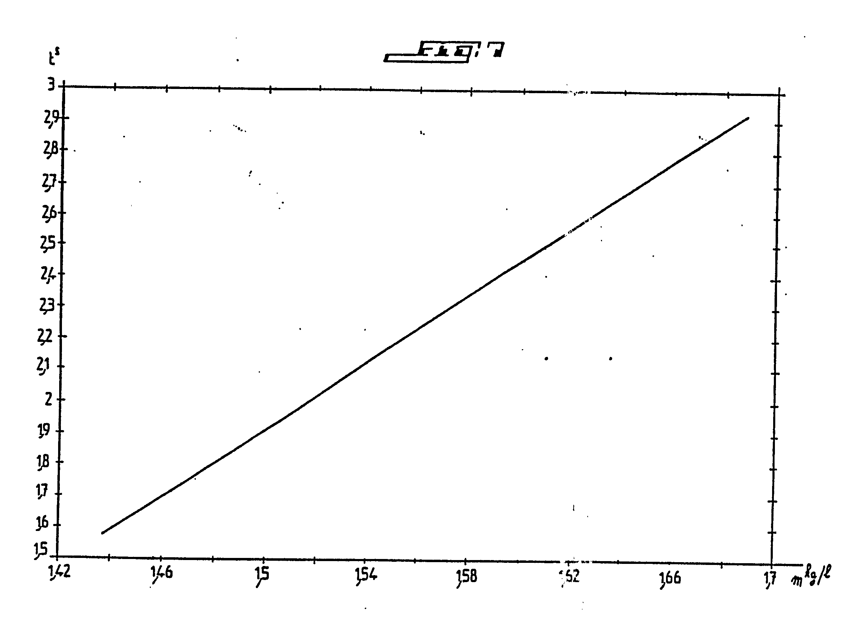

The operation of this system according to cne invention therefore is the following with reference to Figures 3 to 5 : the operator at first enters the reference or set values of the desired volumetric flow rate and of the delivery or emptying time, respectively, corresponding to the desired consistency of the pumped sludge by acting upon the keys 37 to 40 of the key-board, the entered or stored values being automatically displayed on the visualizing screen of the controller. The controller would then calculate the cycle time required for obtaining the displayed desired volumetric flow rate. At the start of the cycle the pump has been automatically filled through gravity with the sludge 12 fed from the tank II, so that the diaphragm has thus been pushed into the upper end position and the metallic body 24 is located in front of the top detector switch 29 which would send a signal to the controller 33 which then operates through the medium of the servo-motor 6 the opening of the compressed air passage-way within the valve 5 for the inlet of compressed air into the top chamber 15a of the pump thereby causing the diaphragm 36 to move downwards while discharging the sludge to empty the pump (block, 47 on Figure 5).

At the bottom end of the stroke of the diaphragm the metallic body 24 has come in front of the bottom detector switch 30 which then would emit a signal to the controller 33 which actuates the closing of the compressed air passage-way and the simultaneous opening of the exhaust passage-way for the top chamber 15a of the pump within the valve 5 (block 48 on Figure 5). At the same time the time period separating the signals emitted by the top and bottom detector switches 29 and 30, respectively, and representing the emptying or delivery time tit is stored within the controller 33 for comparison with the set or reference value displayed on the controller (block 49 on Figure 5).

As the diaphragm 16 rises during this exhaust, the bottom chamber lsb of the pump is being filled under gravity load with the sludge to be pumped during a period $t_2$ (block 50 on Figure 5). This filling would end upon the arrival of the metal body 24 in front of the top detector switch 29 (block 51 on Figure 5).

If the total duration of both consecutive delivery and filling periods $t_1$ and $t_2$, respectively, is smaller than the cycle time $T_c$ calculated by the controller in accordance with the instant consistency of the pumped sludge, the controller 33 would remain passive or inoperative for a stand-by period $t_1$ thereby stopping the operation of the pump for that period (block 52 on Figure 5). When the calculated cycle time To has lapsed the controller would become operative by starting again or repeating the aforesaid sequence of operating steps in the same order of succession for carrying out the next cycle (block 53 on Figure 5).

If the desired delivery time is equal to the displayed reference time the pump will keep operating so as to deliver the volumetric flow rate which has been set. If the delivery time varies by deviating from its displayed reference or set value the controller would cause the pumping speed to change so as to cancel the difference found between the measured and reference delivery times, respectively, to restore the actual delivery time to its displayed reference value and this by overriding the signal representative of the volumetric flow rate thereby maintaining the desired quality of the slurry thus delivered (reaction or follow-up loop between blocks 49 and 52 on Figure 5).

When using this arrangement for pumping purposes :
- if the actual delivery time t1 is longer than its reference or set value,, the cycle time To would decrease;
- if the actual delivery time t1 is shorther than its reference or set value, the cycle time would increase.

When using this sytem for test purposes :
- if the measured delivery time is equal to its set or reference value, the control system would not react;

- if the measured delivery time is longer or shorter than its set or reference value, the control system would act in one direction or in the reverse direction, respectively, upon the aforesaid valve or possibly upon any other control member.

Figure 6 shows a typical lexample of the correlation between the actual effective delivery time r (expressed in seconds and plotted in ordinates on the left-hand side) and the consistency for instance the density or specific mass m (expressed in kg/1 and plotted in ordinates on the right-hand side) of the pumped slurry versus the cumulated operating time T (expressed in seconds and plotted in abscissae). This diagram results from the actual operation of a plant according to the invention for pumping gypsum sludge (grout or slurry) fed from a thickener. The curve 54 in dotted lines shows the variation in measured delivery time t and the curve 55 in solid lines shows the variation in density or specific mass m of the pumped sludge. This chart shows the response of delivery time to a disturbance in the density or specific mass of the pumped slurry.

Figure 7 illustrates the variation in the pump delivery time t (as expressed in second and plotted in ordinates) versus the consistency and in particular the density or specific mass m of the sludge (as expressed in kg/l and plotted in absoissae) in a typical example in which an increment of 0.02 kg/1 of the specific mass or density of the sludge discharged by the pump corresponds to an increase of O.11 s of the discharge time. It is thus apparent that the discharge time t in seconds varies as an increasing linear function (shown by a straight line) of the density or specific mass m expressed in kilogrammes per litre.

The system herein described and shown is but one convenient means for feeling or exploring the sludge in order to carry out a regulation of some parameters thereof and it should be understood that within the scope of the present invention the aforesaid device may be substituted for by any other suitable device through which the sludge to be treated is caused to flow. Thus the invention is not at all limited to the embodiment described and shown but is susceptible of modifications and varianty obvious for anyone skilled in the art, thereby covering the means equivalent to the means described as well as their combinations within the scope of the appended claims.

## Claims

1. Method of quantized qualitative control of the local instant consistency of an indefinite quantity or mass of fluid material such as a liquid or pasty substance (slurry or pulp), characterized in that it consists in applying a determined constant head load or pressure force to a defined volume of said material confined within an invariable guide space for setting it into forced flow motion within the space and in measuring the duration of global displacement of said volume over a given distance between two determined spaced passage points of its path of travel, this displacement time being representative of the at least mean state of consistency of said volume of material.

2. Method according to claim 1, characterized by the detection of successive passages of a physical indicator invariably bound to the unidirectional motion of said fluid material at each one of both aforesaid points, respectively, of its path of travel and by the measurement of the time lapsed between both detection moment or signals.

3. Method according to claim 1 or 2, characterized in that said duration of motion is the time for emptying an enclosure of constant capacity forming said confined guide space, filled with said fluid material and emptied through discharge of the contained finite volume of fluid material under said constant head load out of said enclosure

4 Method according to claim 3 for che preferably continuous control of fluid material moving in forced flow, displaced through volumetric lift-and-force pumping performed within said enclosure, characterized by the measurement of the duration of each discharge stroke under a substantially constant delivery pressure.

5. Method according to claim 4, characterized by its use in particular in a line or way of forced flow of said fluid material for keeping substantially constant the state of desired consistency hence the delivery time and preferably also the desired volumetric flow rate of said discharged fluid material through self-acting regulation of at least 'one respective control factor of its physical values such as the instant pumping speed or volumetric flow rate or power, the pumping cycle time and/or the parameters of treatment or previous physical conditioning or elaboration of said material or of action upon the source of supply thereof.

6. Method according to claim 6, of the kind consisting in selecting a desired volumetric flow rate, determining in accordance with the desired volumetric flow rate and with the available pumping capacity, a duration of the filling or suction and emptying or discharge cycle of said pumping enclosure and operating the performance of each pumping cycle on the lapse of said cycle time to thereby match the instant effective cyclic volumetric pumping flow rate with the desired actual volumetric flow rate which thus is possibly adjustable at will, characterized in that it consists in setting a reference delivery time corresponding to the desired state of consistency of the discharged fluid material and correcting or cancelling any difference between the actual and reference delivery times, respectively, by comparing during each pumping cycle the instant measured actual delivery time to tRe reference delivery time and changing the pumping speed in accordance with the variation in delivery time resented by the deviation ascertained between the measured and reference values, respectively, of the delivery time so as to restore the reference or desired delivery time while referably overriding the regulation of the volumetric flow rate.

7. Method according to any one of claims 4 to 6, characterized by a computerized processing of the data with storage and possible programming of operating steps of action upon variable conditions of physical state of said fluid material and/or of external physical values such as head loads or forces exerted in upstream or downstream process,es, levels of fluid material within in particular an upstream fluid material storage tank for feeding said pumping enclosure and/or in a downstream storage tank for receiving the delivered fluid material.

8. Method according to claim 6 or 7; characterized by the step of making the pumping speed dependent in follow-up relationship of the delivery time varying according to a program set by a reference law.

9. Device for carrying out the method according to claim 6, of the kind comprising a volumetric pump with alternating filling or suction and emptying or discharge, with a positive-displacement driven impeller member reciprocable according to a rectilinear motion, made fast with a physical indicator movable between two opposite end positions corresponding to the suction and discharge stroke end positions, respectively, of said member, with which positions are respectively associated position detector switches successively transmitting each one a signal of presence of said indicator to a control system with chronometric adjustment of the pump motor the discharge operation of which is made dependent in follow-up relationship of the cycle time, said motor applying when actuated a constant thrust force to said member for displacing same in the discharge direction, characterized in that said control system consists of a combined preferably electronic timer controller with in particular a programmable microprocessor for accomplishing the aforesaid functions by performing the aforesaid operations.

10. Device according to claim 9, characterized in that the aforesaid controller comprises a keyboard with keys for the selection of the physical input value (volumetric flow rate, delivery time, range of insensitivity or relative error) to be stored, for the adjustment of the numerical value thereof in the increasing or decreasing direction to fix its reference or set value and for enabling the latter, respectively, as well as means for displaying or visually indicating said input values, respectively, as well preferably as the calculated cycle time and the actual or measured delivery time.

11. Device according to claim 9 or 10, characterized by safety or alarm means incorporated for instance into said controller and signalling in particular an impossibility of regulation in view of the particular instant nature of said fluid material and the malfunctions likely to cause a misadjustment or a defective operation.

12. Device according to one of claims 9 to 11, characterized by its use as a sampling or pilot device mounted in an auxiliary duct for drawing off or tapping fluid material, arranged in by-passing relationship with a main duct for the flow of the fluid material and likely to actuate a control valve or other controlled-action devices placed onto said main duct.

13. Method of using the device according to claim 9 or 10, of the type comprising a membrane pump in particular filled under load through gravity with said fluid material and possibly assisted during suction by a membrane-biassing spring and being single-acting on discharge by a for instance pneumatic power fluid under substantially constant pressure with alternating intake and exhaust through a in particular electromagnetic multiple-way valve operated by said control system electrically connected to two proximity detector switches sensing the opposite stroke end positions of a magnetizable metallic body invariably connected to said membrane, characterized by the following successive operating steps accomplished under the control of said regulator during each operating cycle of the pump
- at the start of the cycle, detecting said body in the pump filling stroke end position;
- simultaneous actuation of oneriing of the compressed air inlet way and of closing of the exhaust way of said valve, respectively, for emptying the pump through discharge of its content;
- sensing said body in the discharge stroke end position;
- storing the emptying time for comparison with the preset reference delivery time;
- simultaneous actuation of closing of the inlet way and opening of the exhaust way, respectively, on said valve;
- filling of said pump through gravity with said fluid material;
- sensing said body in the pump filling stroke end position;
- time-delaying until lapse of the cycle time for deferring or retarding the control action upon said valve or early action thereupon in accordance with the measured emptying time;
- at the end of the cycle, resuming the aforesaid initial control operation of said valve.

_Fig. 2_

_Fig. 1_

Fig 3

Fig 4

EP 0 387 925 A1

FIG. 5

Fig. 6

EP 0 387 925 A1

FIG. 7

EP 0 387 925 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 242 720 (F.J. ZAVASNIK) * Figure; column 2, line 66 - column 3, line 61 * | 1-6,9, 13 | G 01 N 11/06 G 05 D 7/06 F 04 B 43/06 |
| Y,D | BE-A- 902 161 (DORR-OLIVER INC.) * Figures 1-3; page 8, line 27 - page 10, line 11 * | 1-6,9, 13 | |
| A | US-A-3 439 759 (J. ROUANET et al.) * Abstract; column 1, line 65 - column 2, line 18 * | 1,3-9, 13 | |
| A | US-A-2 896 656 (A. ALLEN et al.) * Column 1, lines 47-65; column 2, line 8 - column 3, line 73 * | 5,6,8,9 ,12,13 | |
| A | US-A-4 795 314 (J.R. PRYBELLA et al.) | | |
| A | AT-A- 320 319 (J. SCHURZ) | | |

TECHNICAL FIELDS SEARCHED (Int. Cl.5)

G 01 N
G 05 D

The present search report has been drawn up for all claims

| Place of search | Date of completion of the search | Examiner |
|---|---|---|
| THE HAGUE | 15-06-1990 | HODSON C.M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document